# EUROPEAN PATENT APPLICATION

(11) **EP 3 185 578 A1**
(43) Date of publication of application: **28.06.2017**
(21) Application number: 15834385.5
(22) Date of filing: 23.07.2015
(51) Int. Cl.: H04Q 9/00, G08B 29/02, G08C 15/00, G08C 25/00, H04M 11/00

(54) **COMMUNICATION DEVICE, METHOD FOR CONTROLLING SAME, AND PROGRAM**

(30) Priority: 19.08.2014 JP 2014166569
(71) Applicant: NEC Corporation, Tokyo 108-8001 (JP)
(72) Inventor: KOJIMA, Yukiko, Tokyo 108-8001 (JP); NAKAISHI, Hiroshi, Tokyo 108-8001 (JP)
(74) Representative: Vossius & Partner Patentanwälte Rechtsanwälte mbB
(86) International application number: PCT/JP2015/070975
(87) International publication number: WO 2016/027612

(57) **Abstract**

A communication device (100) includes a communication unit (102) that communicates with each of a plurality of apparatuses (110), an acquisition unit (104) that acquires a measurement value measured by each of the apparatuses (110) and apparatus state information related to a state of each of the apparatuses from each of the apparatuses (110) through the communication unit (102), and acquires communication status information related to a communication status of each of the apparatuses (110) in the communication unit (102), a detection unit (106) that detects an alarm related to each of the apparatuses (110) based on at least any one of the measurement value, the apparatus state information, and the communication status information related to the apparatus (110), and an output unit (108) that outputs information related to the detected alarm related to each of the apparatuses (110).

## Description

### TECHNICAL FIELD

The present invention relates to a communication device, a method of controlling the same, and a program, and particularly relates to a communication device that communicates with a plurality of apparatuses and transmits apparatus information to a server, a method of controlling the same, and a program.

### BACKGROUND ART

An example of a method of telemetering measurement data of gas, electricity, water or the like is disclosed in Patent Document 1. The method of telemetering measurement data disclosed in Patent Document 1 includes reading a measured value from a measuring apparatus for gas, electricity, water or the like for each consumer at the meter inspection date and time, wirelessly communicating with a consumer computer, storing the value in a memory of the consumer computer, and further, transmitting the value to a measurement data collection computer of a supplier of gas, electricity, water or the like at the date and time different from those of another consumer computer.

In addition, Patent Document 2 discloses an example of an information apparatus that communicates with plural sensor terminal apparatuses in a household and outputs an alarm upon receiving an abnormal signal from a sensor terminal apparatus. Such an information apparatus may be controlled by a remote controller to switch between a warning mode for transmitting an alarm through a telephone line upon receiving an abnormal signal from the sensor terminal apparatus, and a release mode for not outputting an alarm even if an abnormal signal is received from the sensor terminal apparatus. The remote controller includes a display unit that displays successful completion of remote-controlled mode switching processing.

### RELATED DOCUMENTS

### PATENT DOCUMENTS

[Patent Document 1] Japanese Unexamined Patent Application Publication No. 2003-331375
[Patent Document 2] Japanese Unexamined Patent Application Publication No. 2004-94847

### SUMMARY OF THE INVENTION

### PROBLEM TO BE SOLVED BY THE INVENTION

In methods disclosed in the aforementioned patent documents, the state of each apparatus such as the measuring apparatus or the sensor terminal apparatus could only be ascertained by a server device on a manager side, such as a device connected through a telephone line to a measurement collection computer or an information apparatus. The state of each apparatus could not be immediately ascertained on a user side.

Incidentally, nowadays, smart meters having a function of reading the measurement value of an electric power meter, gas meter, or the like and a function of communicating the meter reading value are being introduced into general households. Meter reading data is transmitted from a smart meter through a network to an electric power company server, a gas company server, or the like. Likewise, the state of such a smart meter could only be ascertained on the manager side.

The present invention is contrived in view of such circumstances, and an object thereof is to provide a communication device, a method of controlling the same, and a program allowing quick ascertainment of the state of each apparatus on a user side.

### MEANS FOR SOLVING THE PROBLEMS

In each aspect of the present invention, each of the following configurations is adopted in order to solve the above-mentioned problem.

A first aspect of the invention relates to a communication device.

According to the first aspect, there is provided a communication device including:
a communication unit that communicates with each of a plurality of apparatuses;
an acquisition unit that acquires a measurement value measured by each of the apparatuses and apparatus state information related to a state of each of the apparatuses from each of the apparatuses through the communication unit, and acquires communication status information related to a communication status of each of the apparatuses in the communication unit;
a detection unit that detects an alarm related to each of the apparatuses based on at least any one of the measurement value, the apparatus state information, and the communication status information related to the apparatuses; and
an output unit that outputs information related to the detected alarm related to each of the apparatuses.

The second aspect of the invention relates to a method of controlling a communication device executed by at least one computer.

According to the second aspect, there is provided a method of controlling a communication device performed by the communication device, the method including:
communicating with each of a plurality of apparatuses;
acquiring a measurement value measured by each of the apparatuses and apparatus state information related to a state of each of the apparatuses from each of the apparatuses, and acquiring communication status information related to a communication status of each of the apparatuses;
detecting an alarm related to each of the apparatuses based on at least any one of the measurement value, the apparatus state information, and the communication status information related to the apparatuses; and
outputting information related to the detected alarm related to each of the apparatuses.

Meanwhile, in another aspect of the present invention, there may be provided a program causing at least one computer to execute the method according to the second aspect, and a computer readable recording medium having such a program recorded thereon. This recording medium includes a non-transitory tangible medium.

When executing the computer program by a computer, the computer program includes a computer program code causing the computer to carry out the method of controlling the communication device on the communication device.

Meanwhile, it should be noted that any combination of the foregoing components and any representation of the present invention converted between methods, devices, systems, recording media, computer programs, and the like are also effective as aspects of the present invention.

In addition, various types of components of the present invention are not necessarily required to be present individually and independently, but a plurality of components may be formed as one member, one component may be formed by a plurality of members, a certain component may be a portion of another component, a portion of a certain component and a portion of another component may overlap each other, or the like.

In addition, a plurality of procedures are described in order in the method and the computer program of the present invention, but the order of the description is not intended to limit the order of the execution of the plurality of procedures. Therefore, when the method and the computer program of the present invention are executed, the order of the plurality of procedures can be changed within the range of not causing any problem in terms of the contents.

Further, the plurality of procedures of the method and the computer program of the present invention are not limited to be individually executed at timings different from each other. Therefore, another procedure may occur during the execution of a certain procedure, the execution timing of a certain procedure and a portion or all of the execution timings of another procedure may overlap each other, or the like.

### ADVANTAGEOUS EFFECTS OF INVENTION

According to each of the aspects, it is possible to provide a communication device, a method of controlling the same, and a program allowing immediate ascertainment of the state of each apparatus on a user side.

### BRIEF DESCRIPTION OF THE DRAWINGS

The above and other objects, features and advantages will be made clearer from certain preferred exemplary embodiment described below, and the following accompanying drawings.

FIG. 1 is a functional block diagram illustrating a logical configuration of a communication device according to an exemplary embodiment of the present invention.
FIG. 2 is a block diagram illustrating a configuration example of a communication module for implementing the communication device according to the exemplary embodiment of the present invention.
FIG. 3 is a flow diagram illustrating an example of an operation of the communication device according to the exemplary embodiment of the present invention.
FIG. 4 is a functional block diagram illustrating a logical configuration of the communication device according to the exemplary embodiment of the present invention.
FIG. 5 is a flow diagram illustrating an example of an operation of the communication device according to the exemplary embodiment of the present invention.
FIG. 6 is a diagram illustrating an example of a structure of output setting information of the communication device according to the exemplary embodiment of the present invention.
FIG. 7 is a functional block diagram illustrating a logical configuration of the communication device according to the exemplary embodiment of the present invention.
FIG. 8 is a functional block diagram illustrating a logical configuration of the communication device according to the exemplary embodiment of the present invention.
FIG. 9 is a flow diagram illustrating an example of an operation of the communication device according to the exemplary embodiment of the present invention.
FIG. 10 is a functional block diagram illustrating a logical configuration of the communication device according to the exemplary embodiment of the present invention.
FIG. 11 is a diagram illustrating an outline of a configuration of a communication system according to an example of the present invention.
FIG. 12 is a diagram illustrating an example of a structure of apparatus information which is managed by the communication device according to the example of the present invention.

### DESCRIPTION OF EXEMPLARY EMBODIMENTS

Hereinafter, exemplary embodiments of the present invention will be described with reference to the accompanying drawings. In all the drawings, like elements are referenced by like reference numerals and the descriptions thereof will not be repeated.

### (First Exemplary Embodiment)

A communication device according to a first exemplary embodiment of the present invention, a method of controlling the same and a program will be described below.

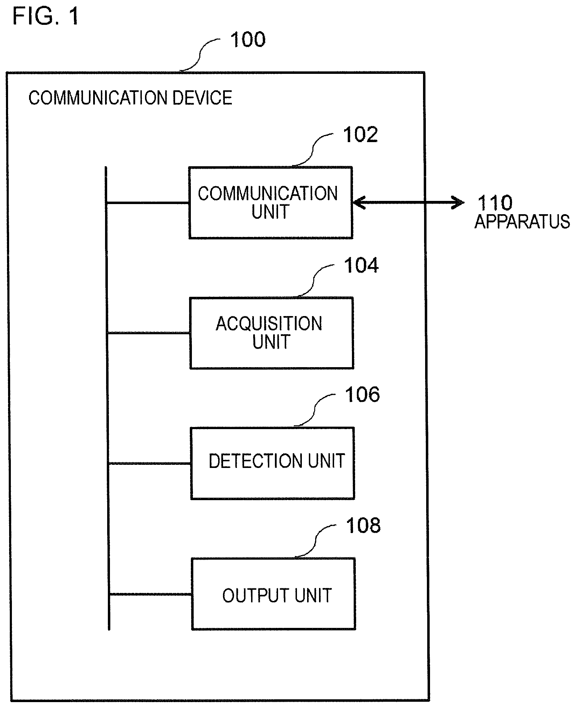

FIG. 1 is a functional block diagram illustrating a logical configuration of a communication device 100 according to the exemplary embodiment of the present invention.

The communication device of the present invention has communication functions of communicating with at least one apparatus, acquiring a measurement value from each apparatus , and transmitting the acquired measurement value to a management server.

The communication device 100 according to the exemplary embodiment of the present invention includes: a communication unit 102 that communicates with each of a plurality of apparatuses 110; an acquisition unit 104 that acquires a measurement value measured by each of the apparatuses 110 and apparatus state information related to the state of each of the apparatuses from each of the apparatuses 110 through the communication unit 102 and acquires communication status information related to the communication status of each of the apparatuses 110 in the communication unit 102; a detection unit 106 that detects an alarm related to each of the apparatuses 110 based on at least any one of the measurement value, the apparatus state information, and the communication status information related to the apparatus 110; and an output unit 108 that outputs information related to the detected alarm related to each of the apparatuses 110.

Apparatuses with which the communication device of the present invention communicates are, for example, measuring apparatuses such as an electric power meter, a gas meter, or a water meter, and measurement values acquired from these apparatuses are periodically transmitted from the communication device of the present invention to a server (not shown) or the like. That is, the communication device of the present invention serves as a relay station that transfers information of a plurality of apparatuses to a server. In addition, the communication device of the present invention may communicate with apparatuses providing various services in various fields, other than the above measuring apparatuses. As services provided to a user in association with these apparatuses, for example, fee collection for cable television or the like, provision of weather forecasts, traffic information, and the like may also be considered.

As described later, in the present exemplary embodiment, a configuration is described by way of example of an apparatus and a communication device formed integral with each other, in which the communication device of the present invention is provided as a communication module in a smart meter including an electric power meter, the electric power meter being one of the apparatuses. However, the communication device of the present invention may be in the form of a single communication module separate from each apparatus.

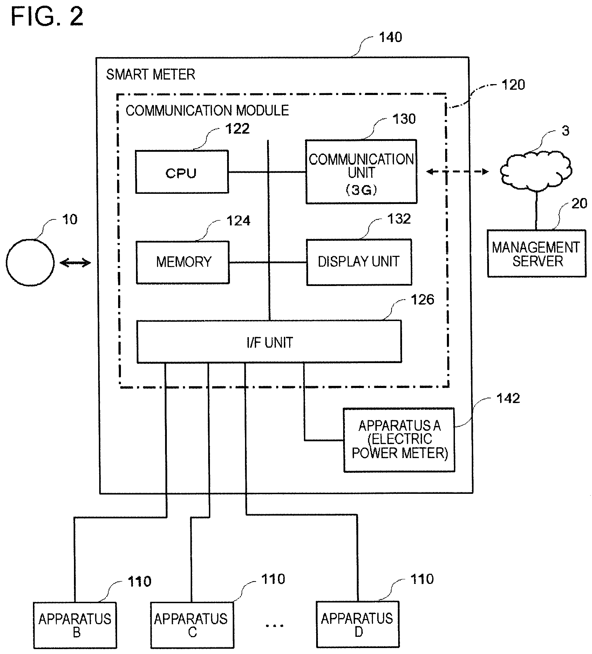

FIG. 2 is a block diagram illustrating a configuration example of a communication module 120 for implementing the communication device 100.

The communication module 120 is implemented by a computer including a central processing unit (CPU) 122, a memory 124, a program 10 loaded in the memory 124 for implementing the components of FIG. 1, a storage unit (included in the memory 124) such as a read only memory (ROM) or a flash memory having the program 10 stored therein, an interface for network connection (communication unit 130), and an interface (I/F) unit 126 that communicates with the plurality of apparatuses 110.

Each component of the communication device 100 of FIG. 1 is implemented by any combination (so-called "firmware") of hardware and software of the communication module 120 (computer). It will be understood by those skilled in the art that embodying methods and devices thereof may be modified in various ways. A functional block diagram indicating a communication device (communication module) of each exemplary embodiment which will be described below shows a block of a logical functional unit rather than a configuration of a hardware unit.

In addition, in each of the following drawings, the configurations of portions irrelevant to the essence of the present invention are omitted and not shown.

The CPU 122 of the communication module 120 of FIG. 2 executes the program 10 stored in the memory 124 by reading it out to the memory 124, thus allowing to implement each function of each unit of FIG. 1 of the communication device 100.

The computer program 10 of the present exemplary embodiment is described to cause a computer for implementing the communication device 100 (communication module 120) to execute: a procedure of communicating with each of the plurality of apparatuses 110; a procedure of acquiring a measurement value measured by each of the apparatuses 110 and apparatus state information related to the state of each of the apparatuses 110 from each of the apparatuses 110 through the communication procedure, and acquiring communication status information related to the communication status of each of the apparatuses 110 in the communication procedure; a procedure of detecting an alarm related to each of the apparatuses 110 based on at least any one of the measurement value, the apparatus state information, and the communication status information related to the apparatus 110; and a procedure of outputting information related to the detected alarm related to each of the apparatuses 110.

The computer program 10 of the present exemplary embodiment may be recorded on a computer readable recording medium. The recording medium may have various forms without being particularly limited. In addition, the program 10 may be loaded from the recording medium into a memory of a computer, and may be downloaded in a computer through a network and be loaded into the memory.

The recording medium having the computer program 10 recorded thereon includes a medium capable of being used by a non-transitory tangible computer, and has computer readable program codes embedded in the medium. When the computer program is executed on a computer, the computer is caused to execute the following control method for implementing the communication device 100 (communication module 120).

In addition, as described later, an application program for the communication device of the present invention is also installed in advance in a user's portable terminal or the like that receives the information related to an alarm transmitted from the communication device of the present invention. The application program may be regarded as a portion of a computer program of the present invention. The application program may only require the functions of receiving and displaying information. Since the application program is irrelevant to the essence of the present invention, and is obvious to those skilled in the art, the detailed description thereof will not be repeated.

In the present exemplary embodiment, the communication device 100 of FIG. 1 is implemented as the communication module 120 included in a smart meter 140 of FIG. 2. The smart meter 140 of FIG. 2 includes the communication module 120 and an electric power meter 142 (apparatus A). The electric power meter 142 measures the amount of power consumption, and delivers a measurement value to the communication module 120. In addition, the smart meter 140 communicates with apparatuses 110 (for example, apparatus B, apparatus C, apparatus D, ···; meanwhile, the number of apparatuses is not limited to the shown number) other than the electric power meter 142 through the I/F unit 126.

The I/F unit 126 is an interface unit for communication with the plurality of apparatuses 110. In the drawing, the I/F unit 126 is shown as one unit, but may be a different unit for each of the apparatuses 110. The I/F unit 126 may have an interface function of a communication system compatible with each of the apparatuses 110, and the communication system is not particularly limited. A connection to an apparatus 110 may be any of wired and wireless connections, and may be a combination thereof. In a case of wireless communication, the I/F unit 126 may have various communication systems such as a wireless local area network (LAN), Bluetooth (Registered Trademark), or wireless communication of a 920 MHz-band system adopted therein, and is assumed to have a communication interface function compatible with a communication system. It is preferable that an appropriate communication system is adopted in accordance with the specifications, installation locations, the mutual positional relationship, the distance, the communication frequency, the amount of communication therebetween, and the like of the communication module 120 (communication device 100) and each of the apparatuses 110. Whether to adopt any of the communication systems is irrelevant to the essence of the present invention, and thus the detailed description thereof will not be repeated.

The communication unit 130 is connected to a cellular phone network 3 using a cellular phone communication system such as 3rd generation (3G) or long term evolution (LTE), and communicates with a management server 20 (only one server is shown in FIG. 2, but the number of servers is not limited thereto) which is a transmission destination of a measurement value. The smart meter 140 of the present exemplary embodiment transfers the measurement value, collected from each of the apparatuses 110 via the I/F unit 126, to the management server 20 through the communication unit 130. A communication device 200 may have a server information table storing destination information (such as, for example, an IP address) of the management server 20 in association with each of the apparatuses 110. For example, in the server information table, the destination information of the electric power company server is associated with the electric power meter 142, and the destination information of the gas company server is associated with the gas meter.

A display unit 132 is, for example, a light emitting diode (LED) indicator. Meanwhile, in the present exemplary embodiment, since the communication device 100 is included in the smart meter, an LED indicator is desirable due to the following problems. However, under the conditions that the following problems can be avoided, the display unit 132 may have other indicators such as a liquid crystal indicator or an organic EL display indicator adopted therein, and there is no particular limitation thereto.

The LED indicator is desirable due to the following problems to be solved of the smart meter: to facilitate water-proofing and dust-proofing measures since smart meters are assumed to be installed outdoors; to reduce component and manufacturing costs; to reduce repair and maintenance costs; to reduce the size due to the limitation in the space to be occupied by the indicator in a housing of the smart meter; or to suppress the amount of power consumption to reduce the burden of electricity rates and the like of the user.

Referring back to FIG. 1, the communication unit 102 communicates with the plurality of apparatuses 110. The communication unit 102 is equivalent to the I/F unit 126 of the communication module 120 of FIG. 2. As described above, the system of communication used with the plurality of apparatuses 110 is not particularly limited, and any system compliant with each of the apparatuses 110 may be adopted.

The acquisition unit 104 acquires the measurement value measured by each of the apparatuses 110 and the apparatus state information related to the state of each of the apparatuses from each of the apparatuses 110 through the communication unit 102, and acquires the communication status information related to the communication status of each of the apparatuses 110 in the communication unit 102.

Examples of the measurement value measured by each of the apparatuses 110 may include, for an electric power meter for example, an instantaneous power value, a power accumulation value for a predetermined time period (for example, for 30 minutes), a reverse power flow value of surplus power of a generator or the like, and time information of each value. Further, the measurement value of the present invention may be diversely considered in accordance with the type of apparatus or service contents, and may be, for example, the gas consumption amount (the gas consumption amount for an hour and time information), the water consumption amount, the service usage amount (the communication volume (packet) or used storage capacity), the used service time (frequency of service use), output values of various types of sensors (such as, for example, a fire alarm, a carbon monoxide alarm, or a gas leak alarm), or the like.

Examples of the apparatus state information of each of the apparatuses 110 may include liquefied petroleum (LP) gas residual amount information, gas shutoff information (such as automatic shutoff due to earthquakes or alarms), a remaining cell capacity, a remaining battery capacity, a battery deterioration status, or information related to a failure, an operation stop, a restart or the like detected by the apparatus itself.

Examples of the communication status information of each of the apparatuses 110 may include information related to a radio wave status (signal intensity), the presence/absence or delay of a response, the reception of data of a non-compatible format or invalid data, and the like during communication between the apparatus 110 and the communication device 100.

Methods of causing the acquisition unit 104 to acquire information of the apparatus 110 may be diversely considered, and are exemplified below, but are not limited thereto.
(a1) A request from the management server 20 is transmitted to an apparatus 110 through the communication module 120, and a response from the apparatus 110 is relayed by the communication module 120 to be transmitted to the management server 20. The communication module 120 acquires a measurement value (apparatus state information) from this relay process.
(a2) The measurement value (apparatus state information) is spontaneously sent from the apparatus 110 side to the communication module 120 at a predetermined cycle. The communication module 120 receives and relays transmit the value to the management server 20. The communication module 120 acquires the measurement value (apparatus state information) from this this relay process.
(a3) The communication module 120 spontaneously collects the measurement value (apparatus state information) at a predetermined cycle.

The detection unit 106 detects an alarm related to each of the apparatuses 110 based on at least any one of the measurement value, the apparatus state information, and the communication status information related to each apparatus 110. Items to be detected as alarms may be diversely considered in accordance with the type of apparatus or service contents.

For example, on acquiring a measurement value, the detection unit 106 detects each of the following cases as an alarm by making an abnormality determination: an acquired measurement value being equal to or greater than a predetermined upper limit or equal to or less than a predetermined lower limit based on the results of comparison with a predetermined threshold; a measurement value being outside a predetermined range; a measurement value being unable to be acquired; or the like.

Similarly, on acquiring the communication status information, the detection unit 106 detects communication errors such as the following cases as an alarm: the radio wave level (signal intensity) of communication exceeding a predetermined value or being less than the predetermined value; a time-out occurring upon acquiring the measurement value; a packet loss occurring during communication; or reception of invalid data.

In addition, on acquiring the apparatus state information, the detection unit 106 detects communication errors such as the following cases as an alarm: the remaining cell capacity or the remaining battery capacity falling below a predetermined value; an occurrence of deterioration in a battery; an occurrence of a gas leak; the generated carbon monoxide amount exceeding a predetermined value; detection of stopping, restarting or the like of the operation of the apparatus; or the like.

Meanwhile, without being limited to the above, the detection unit 106 detects the inclusion of abnormal data or information different from normal in the measurement value, the apparatus state information, or the communication status information related to each of the apparatuses 110.

The output unit 108 outputs information related to the detected alarm related to each of the apparatuses 110.

Methods of outputting information related to an alarm may be diversely considered, and are exemplified below, but are not limited thereto.
(b1) The information is displayed on an indicator (display unit 132 of the communication module 120 of FIG. 2) included in the communication device 100.
(b2) A user's terminal is notified of the contents of an alarm from the communication device 100.

Meanwhile, the communication device 100 may output the information related to an alarm to the management server 20. However, since such a function is not essential as a function of the communication device of the present invention and is irrelevant to the essence of the present invention, the detailed description thereof will not be repeated.

In the above (b1), the LED indicator may be at least one LED lamp, an LED for displaying at least one numeral (or alphameric character), an LED for dot matrix display, or a combination thereof. In addition, the LED indicator may express the apparatus in which an alarm has been detected, the detail of the detected alarm, the degree of significance (urgency) of the alarm, or the like by a lighting and blinking pattern, a color pattern, or a combination thereof.

In the above (b2), notification methods may be further diversely considered, and are exemplified below, but are not limited thereto.
(c1) A message is transmitted and displayed to and on an in-home display (IHD) of the home power management system (HEMS) by using a wireless communication unit (I/F unit 126 of the communication module 120 of FIG. 2) of a 920 MHz-band system or the like included in the communication device 100.
(c2) An e-mail is transmitted to an email address of a user's portable terminal (such as a smartphone, a tablet terminal, or a cellular phone) or a personal computer by using a communication unit (communication unit 130 of the communication module 120 of FIG. 2) or the like connected to the cellular phone network 3 using a cellular phone communication system such as 3G or LTE which is included in the communication device 100.
(c3) A message is transmitted to a user's portable terminal (a smartphone, a tablet terminal, or the like) (not shown) using a communication system (not shown) or the like such as Bluetooth (Registered Trademark) included in the communication device 100 and is received by an application program on the portable terminal side to display the message. Meanwhile, as described above, this application program is a program for the communication device 100 of the present invention, and is installed and started up in advance in the user's portable terminal.

In the above (b1), the detailed contents of an alarm is not required to be presented, namely, it is only required that at least the occurrence of an alarm is directly transmitted at an early stage to the user at the scene, since. This is because the maintenance of an apparatus such as a smart meter should be appropriately handled by an expert engineer such as a serviceman. For example, if a user is able to notice the occurrence of an alarm at the sight of an indication on the indicator of the smart meter, the user is able to notify the electric power company or a maintenance and management company of such a situation. It is preferable that the electric power company or the maintenance and management company having received the notification provides the user with appropriate instructions or dispatches a serviceman to deal with the situation.

In the above (b2), instructions may be presented to the user together with the details of the alarm. For example, in a case where the remaining cell capacity becomes low, the detail of the low remaining capacity and a message for urging the user to replace the battery may be presented. A specific method of replacing the battery may be presented, and the uniform resource locator (URL) address of a web page indicating a maintenance method or the contact address for inquiry may be indicated.

A method of controlling the communication device 100 of the present exemplary embodiment configured in such a manner will be described below.

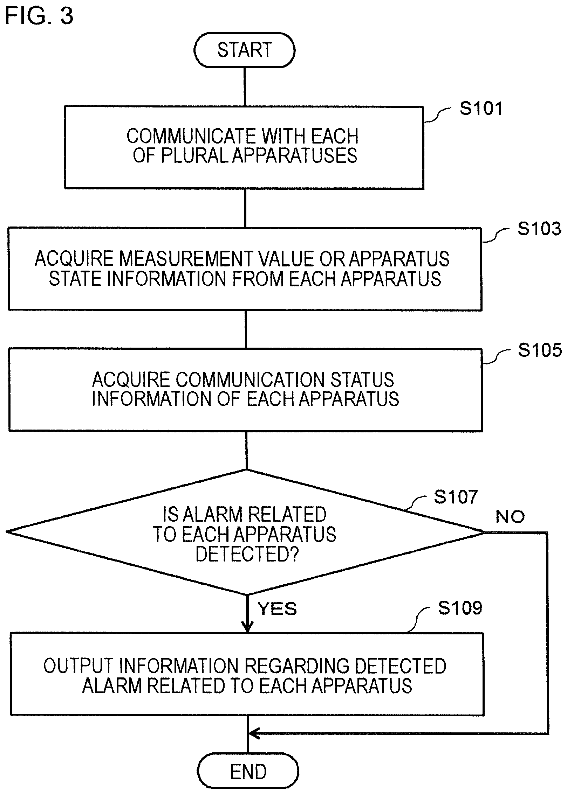

FIG. 3 is a flow diagram illustrating an example of an operation of the communication device 100 of the present exemplary embodiment.

The control method according to the exemplary embodiment of the present invention is a method of controlling the communication device 100, and is a control method executed by a computer for implementing the communication device 100.

The control method of the present exemplary embodiment performed by the communication device 100 includes: communicating with each of a plurality of apparatuses 110 (step S101) ; acquiring a measurement value measured by each of the apparatuses 110 and apparatus state information related to the state of each of the apparatuses 110 from each of the apparatuses 110 through the communication unit 102 (step S103); acquiring communication status information related to the communication status of each of the apparatuses 110 in the communication unit 102 (step S105); detecting an alarm related to each of the apparatuses 110 based on at least any one of the measurement value, the apparatus state information, and the communication status information related to the apparatus 110 (step S107); and outputting information related to the detected alarm related to each of the apparatuses 110 (step S109).

More specifically, in the communication device 100, first, the communication unit 102 establishes communication with each of the plurality of apparatuses 110 through the I/F unit 126 using respective communication system (step S101). The acquisition unit 104 acquires each measurement value from each of the apparatuses 110 through the I/F unit 126 (step S103). In the present exemplary embodiment, for example, as a function of the smart meter 140, the communication unit 102 acquires the measurement value including a power accumulation value periodically (for example, every 30 minutes) from the electric power meter 142 through the I/F unit 126. In addition, the acquisition unit 104 acquires the apparatus state information from each of the apparatuses 110 through the I/F unit 126 (step S103).

Further, the acquisition unit 104 acquires the communication status information of each of the apparatuses 110 through the I/F unit 126 (step S105). For example, when the acquisition unit 104 acquires the measurement value or the apparatus state information from the apparatus 110, if there is an occurrence of a communication error, the acquisition unit acquires a communication error as the communication status information. Alternatively, the acquisition unit 104 may acquire a radio wave status (signal intensity) of wireless communication with the apparatus 110 at a predetermined timing as the communication status information.

The detection unit 106 detects an alarm related to each of the apparatuses 110 based on at least any one of the measurement value, the apparatus state information, and the communication status information related the apparatus 110 (step S107). For example, in a case where the power accumulation value obtained from the electric power meter 142 is equal to or greater than a threshold, an alarm from the electric power meter 142 is detected by the detection unit 106. Alternatively, in a case where there is no response during communication with the apparatus C, an alarm related to the apparatus C is detected by the detection unit 106.

In a case where an alarm is detected (YES in step S107), the output unit 108 outputs information related to the detected alarm related to each of the apparatuses 110 (step S109). In a case where no alarm is detected (NO in step S107), the present process is ended.

Meanwhile, a procedure of establishing communication of step S101 in the flow diagram is executed at startup (restart), reconnection, or the like of the communication device 100 or the apparatus 110. In addition, procedures of information acquisition and alarm detection of steps S103 to S107 in the flow diagram are repeatedly executed at all times, at an information acquisition timing or at an optional timing.

As described above, in the communication device 100 according to the exemplary embodiment of the present invention, the acquisition unit 104 acquires the measurement value, the state of each of the apparatuses 110, communication status and the like of the apparatus 110, in a process in which the communication unit 102 communicates with the plurality of apparatuses 110 to acquire the measurement value of each of the apparatuses 110 and transmit the measurement value to a server. Then, the detection unit 106 detects an alarm related to each of the apparatuses 110, and the output unit 108 outputs the information related to the detected alarm.

As stated above, according to the communication device 100 of the exemplary embodiment of the present invention, alarms related to a plurality of apparatuses can be detected and output by the communication device 100 on the user side rather than by the server, and thus it is possible for the user to quickly ascertain the alarm state of each apparatus.

Further, according to the communication device 100 of the present exemplary embodiment, it is possible to output alarms concerning not only the state or communication status of an apparatus but also the measurement value. Thereby, in a case the user is charged based on the measurement value, and the measurement value is a value unintended by the user due to, for example, gas leakage, electric leakage, power theft, water leakage, and the like, it is possible for the user to quickly grasp such a status.

Further, according to the communication device 100 of the present exemplary embodiment, the measurement value of each of the apparatuses is transmitted to the server side, but since the state or communication status of each of the apparatuses is not required to be transmitted to the server side, it is possible to reduce a load for communication with the server.

In addition, in the example of the smart meter 140 of FIG. 2, even in a case where the smart meter 140 is possessed by an electric power company, alarms related to apparatuses (for example, a gas meter or a water meter) and the like other than the electric power meter 142 may be detected by the communication module 120 included in the smart meter 140, and thus the alarms concerning other apparatuses may also be displayed on the display unit 132 or notified to a user's terminal. Thereby, the user is able to grasp the occurrence of alarms in apparatuses connected to the communication module 120 of the smart meter 140.

### (Second Exemplary Embodiment)

Next, a communication device and a method of controlling the same according to a second exemplary embodiment of the present invention will be described below. Meanwhile, since a program of the present exemplary embodiment is for causing at least one computer to execute a method of controlling a communication device similarly to the above exemplary embodiment, the detailed description thereof in the present exemplary embodiment will not be repeated.

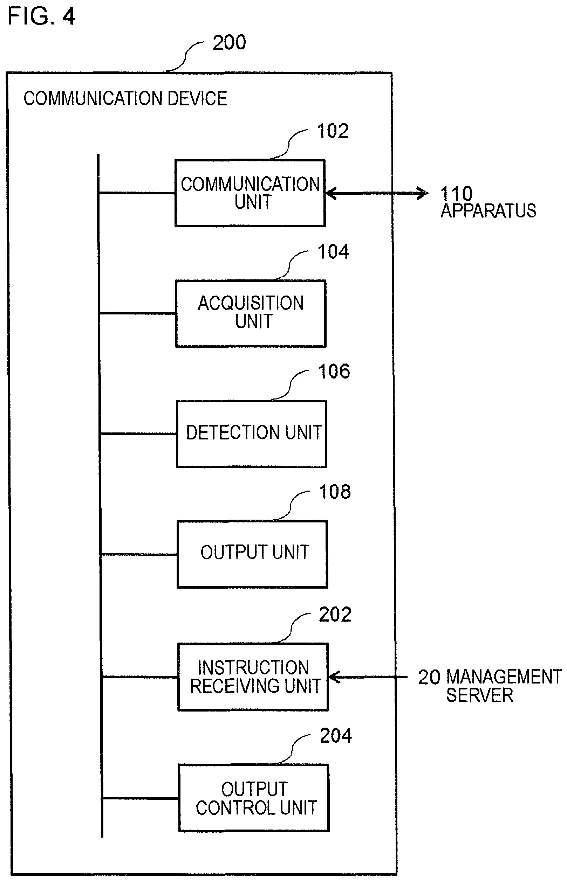

FIG. 4 is a functional block diagram illustrating a logical configuration of a communication device 200 according to the exemplary embodiment of the present invention.

The communication device 200 of the present exemplary embodiment further has a configuration in which an output of an alarm can be controlled by an external instruction or a setting, in addition to the configuration of the communication device 100 of the above exemplary embodiment shown in FIG. 1. Specifically, the communication device 200 includes the communication unit 102, the acquisition unit 104, the detection unit 106, and the output unit 108 which are the same as those of the communication device 100 shown in FIG. 1, and further includes an instruction receiving unit 202 and an output control unit 204. Meanwhile, a description will be given assuming that the communication device 200 of the present exemplary embodiment is also implemented by the communication module 120 included in the same smart meter 140 as that of the communication device 100 of the above exemplary embodiment.

The communication device 200 of the present exemplary embodiment further includes an instruction receiving unit 202 that receives an instruction from the outside related to the output of an alarm outputted by the output unit 108, and an output control unit 204 that, when an instruction is received, outputs information related to an alarm detected by the detection unit 106 to the output unit 108.

Methods of receiving an instruction by the instruction receiving unit 202 are exemplified below, but may be diversely considered and are not limited thereto.
(d1) An instruction is received from a management server 20 (for example, an electric power company server or a gas company server) which is a transmission destination of the measurement value of each of the apparatuses 110, or alternatively, an instruction is received from various service providers or management servers 20 of management companies, or the like through the cellular phone network 3.
   In the present exemplary embodiment, the communication unit 130 of FIG. 2 may communicate with these management servers 20 through the cellular phone network 3 such as 3G or LTE and receive instructions from the management servers 20.
(d2) Each of the apparatuses 110 or the communication device 200 includes a receiving unit (not shown) such as an operation button, and receives an operation instruction from a user or a serviceman. However, instructions from users are preferably imposed with operational restrictions so that only items which do not interfere with the operation of a system are received.
(d3) A maintenance terminal apparatus (not shown) is connected to each of the apparatuses 110 or the communication device 200 for receiving an instruction input to the terminal apparatus by a serviceman.

The contents of an "instruction" received by the instruction receiving unit 202 may be considered to have various forms as described in exemplary embodiments stated later, but is, in the present exemplary embodiment, assumed to be an instruction for permitting output of an alarm. In another example, the instruction receiving unit 202 may receive an instruction for prohibiting the permitted output of an alarm, or may receive an instruction to permit or prohibit the output of an alarm.

Meanwhile, an instruction from the outside may be received by the instruction receiving unit 202 after an alarm has been detected, but the instruction is preferably received in advance by the instruction receiving unit 202. It is desirable that when an alarm is detected by the detection unit 106, the output control unit 204 determines whether the alarm may be output in accordance with the instruction received in advance. This is because, in a case where a configuration is adopted in which an instruction from the outside is received during alarm detection, communication between the communication device 200 and the outside (for example, a server) is required, undesirably complicating the process during the alarm detection. Meanwhile, the configuration for receiving an instruction in advance does not exclude a configuration for receiving an instruction after alarm detection.

In addition, the instruction receiving unit 202 may inquire of the management server 20 and receive an instruction as the response. The instruction receiving unit 202 may inquire of the management server 20 by referring to the server information table to acquire the destination information of the management server 20 corresponding to each of the apparatuses 110. The instruction receiving unit 202 may make inquiries at installation or initialization of the apparatus 110 or the communication device 200, or at an optional timing.

Alternatively, in a case where the detection unit 106 has detected an alarm in a situation where permission to output the alarm has not been received, the instruction receiving unit 202 may inquire of the management server 20 on whether or not to permit outputting the alarm.

When an alarm is detected by the detection unit 106, the output control unit 204 does not output information related to the alarm to the output unit 108 until an instruction is received, and outputs the information related to the alarm to the output unit 108 only after an instruction is received.

Meanwhile, in a configuration in which alarm information is transmitted to the management server 20, a restriction on the output of an alarm according to an instruction in the output control unit 204 is not to restrict the transmission of the alarm information to the management server 20. In the present invention, there is no particular limitation on control related to the transmission of the alarm information to the management server 20.

A method of controlling the communication device 200 of the present exemplary embodiment configured in such a manner will be described below.

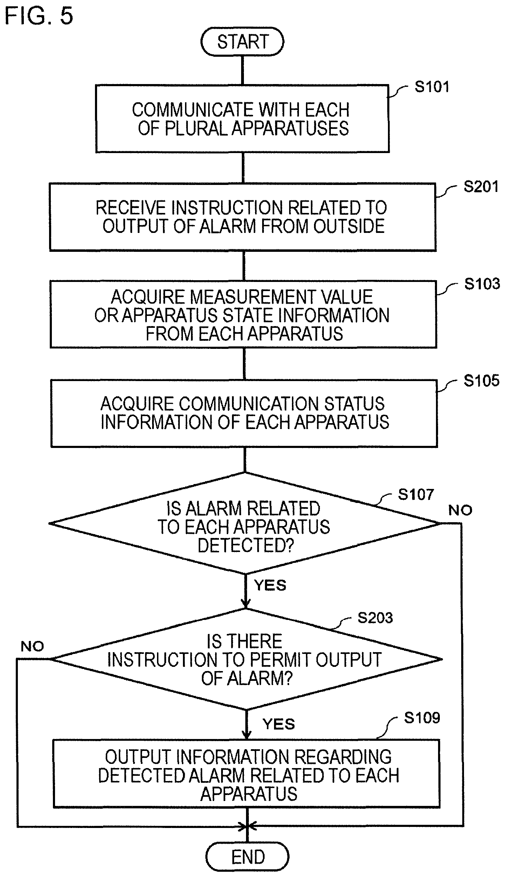

FIG. 5 is a flow diagram illustrating an example of an operation of the communication device 200 of the present exemplary embodiment.

A procedure of the flow diagram of the communication device 200 of the present exemplary embodiment shown in FIG. 5 includes the same steps S101 to S109 as those in the flow diagram of the above exemplary embodiment shown in FIG. 3, and further includes steps S201 to S203.

In the communication device 200, the communication unit 102 establishes communication with each of the plurality of apparatuses 110 through the I/F unit 126 using respective communication systems (step S101). The instruction receiving unit 202 receives an instruction from the outside related to an alarm output by the output unit 108 (step S201). In the present exemplary embodiment, the instruction receiving unit 202 receives an instruction permitting output of an alarm, and stores the instruction contents in the memory 124.

In a case where information of each of the apparatuses 110 is acquired by the acquisition unit 104, and an alarm is detected by the detection unit 106 (YES in steps S103, S105, and S107), the flow proceeds to step S203. In step S201, the output control unit 204 determines whether an instruction related to the output of an alarm (instruction permitting the output) has been received. When the instruction related to the output of an alarm (instruction permitting the output) has not been received (NO in step S203), step S109 is bypassed. On the other hand, when the instruction related to the output of an alarm (instruction permitting the output) has been received in step S201 (YES in step S203), the flow proceeds to step S109, and the output unit 108 outputs information related to the alarm.

Meanwhile, a procedure of establishing communication of step S101 in the flow diagram is executed at startup (restart), reconnection, or the like of the communication device 200 or the apparatuses 110. In addition, procedures of information acquisition and alarm detection of steps S103 to S107 in the flow diagram are repeatedly executed at all times, at an information acquisition timing or at an optional timing.

In addition, a procedure of receiving an instruction related to the output of an alarm in step S201 is not required to be performed at every startup of the communication device 200, and may be performed only at its initial setting or maintenance. In addition, when instructed from the outside, the procedure can be performed as needed. Alternatively, when the detection unit 106 detects an alarm in a situation where permission for outputting the alarm has not been received, the device may inquire of the management server 20 on whether or not to permit outputting the alarm, and receive an instruction from the management server 20.

As described above, in the communication device 200 according to the exemplary embodiment of the present invention, the instruction receiving unit 202 receives an instruction related to the output of an alarm from the outside, and the output control unit 204 does not output information related to the alarm to the output unit 108 until the instruction is received, and outputs information related to the alarm to the output unit 108 only after the instruction is received.

As stated above, according to the communication device 200 of the exemplary embodiment of the present invention, the same effects as those in the above exemplary embodiment are exhibited, and not all information related to every alarm of the plurality of apparatuses 110 are output but only the information determined by a manager as being necessary for a user is selected and output. Thereby, it is possible to appropriately provide information required by a user.

In addition, as in the present exemplary embodiment, even in a case where the smart meter 140 is an apparatus possessed by an electric power company, by obtaining permission from a server of a gas company or another service provider for outputting information related to alarms, information related to detected alarms related to apparatuses other than an electric power meter, for example, a gas meter, a water meter or the like may also be output by the smart meter 140.

### (Modification Aspect 1 of Second Exemplary Embodiment)

A communication device of Modification Aspect 1 of the second exemplary embodiment will be described below.

The communication device of the present exemplary embodiment has the same configuration as that of the communication device 200 shown in FIG. 4, and further includes a configuration for controlling output of an alarm by referring output setting information 212 that stores an instruction related to the output of an alarm.

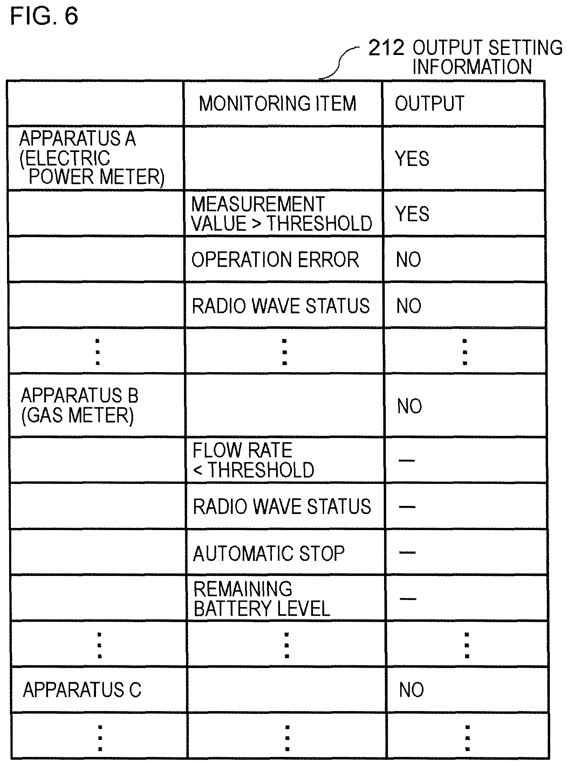

FIG. 6 is a diagram illustrating an example of a structure of the output setting information 212 of the communication device 200 of the present exemplary embodiment.

The output setting information 212 includes information related to permission or prohibition to output an alarm with respect to each monitoring item of the alarm or with respect to each of the apparatuses 110.

In the present exemplary embodiment, the output control unit 204 refers to the output setting information 212, and outputs information related to the alarm detected by the detection unit 106 to the output unit 108, based on the output setting information 212.

For example, the output control unit 204 outputs information of an alarm for a monitoring item or an apparatus 110 detected by the detection unit 106 to the output unit 108, even before an instruction is received, if the alarm for the monitoring item or the apparatus 110 is permitted to be output.

As shown in FIG. 6, for example, in the apparatus A (electric power meter), the detection unit 106 may monitor the following monitoring items. The output setting information 212 includes permission or prohibition to output an alarm with respect to each monitoring item. The following are illustrative, and there is no limitation thereto.
(f1) Monitoring whether a measurement value exceeds a threshold
(f2) Monitoring the state of an operation error detected by an apparatus
(f3) Monitoring the status of communication (radio wave status) with an apparatus

In the example of FIG. 6, the apparatus A is set to output an alarm only when the measurement value of (f1) exceeds the threshold.

In FIG. 6, each of the apparatus B and the apparatus C is set to prohibit output of an alarm in units of apparatuses, the setting information being included in the output setting information 212. In the apparatus B, in the case the setting is changed to permit output of an alarm, permission or prohibition to output an alarm may be further set for each monitoring item. Meanwhile, in the apparatus B (gas meter), the detection unit 106 may monitor the following monitoring items.
(g1) Monitoring whether a gas flow rate is less than a threshold
(g2) Monitoring the status of communication (radio wave status) with an apparatus
(g3) Detecting operation of an automatic stop (shutoff) due to detection of an earthquake or an alarm by an apparatus
(g4) Monitoring the remaining cell capacity

In addition, the example of FIG. 6 is configured to allow the output of an alarm to be set for each monitoring item in each of the apparatuses 110, but there is no limitation thereto. Output of alarms for the monitoring items common to the apparatuses may be set together in the apparatuses. The output setting information 212 may be included in the program 10 in advance to be stored in the memory 124 of each of the communication devices 200 or may be transmitted from each of the apparatuses 110, the management server 20, or a maintenance terminal apparatus to be stored in the memory 124.

In addition, the setting of the output setting information 212 may be changed in accordance with an instruction related to the output of an alarm received by the instruction receiving unit 202. In this manner, the output setting information 212 may be prepared in advance, and may be updated by the instruction received by the instruction receiving unit 202.

In the communication device 200 of the present exemplary embodiment configured in such a manner, information related to permission or prohibition to output an alarm is stored in the output setting information 212 for each monitoring item of the alarm or for each of the apparatuses 110, and the output control unit 204 controls the output of an alarm in accordance with the output setting information 212.

Thereby, according to the communication device 200 of the present exemplary embodiment, the same effects as those in the above exemplary embodiment are exhibited, and since the monitoring items can be set for each of the apparatuses 110, items to be notified to the user may be appropriately output without outputting alarms for all items.

### (Modification Aspect 2 of Second Exemplary Embodiment)

A communication device of Modification Aspect 2 of the second exemplary embodiment will be described below.

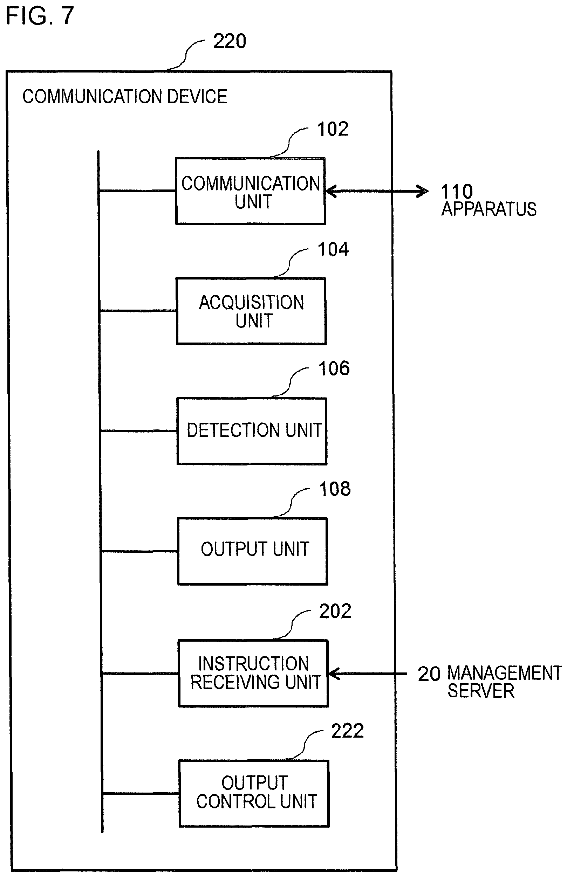

FIG. 7 is a functional block diagram illustrating a logical configuration of a communication device 220 according to the exemplary embodiment of the present invention.

The communication device 220 of the present exemplary embodiment shown in FIG. 7 is different from the communication device in the above exemplary embodiment, in that, until an instruction is received, the communication device 220 outputs summary information not expressing the content of the detected alarm, and after the instruction is received, the communication device 220 outputs content information of the alarm. The communication device 220 of the present exemplary embodiment includes the communication unit 102, the acquisition unit 104, the detection unit 106, the output unit 108, and the instruction receiving unit 202 which are the same as those of the communication device 200 shown in FIG. 4, and further includes an output control unit 222 instead of the output control unit 204.

Meanwhile, the communication device 220 of the present exemplary embodiment may also be combined with the configuration of the Modification Aspect 1 of the second exemplary embodiment.

In the communication device 220 of the present exemplary embodiment, when an instruction has not been received upon the detection unit 106 detecting an alarm, the output control unit 222 outputs summary information of the alarm not expressing the content of the alarm to the output unit 108, and when the instruction is received, then the output control unit 222 outputs content information of the alarm to the output unit 108.

In the present exemplary embodiment, the "instruction" received by the instruction receiving unit 202 is an instruction permitting output of content information of an alarm. In another example, the instruction receiving unit 202 may receive an instruction to prohibit the content information of an alarm to be output, and may receive an instruction of permission or prohibition to output the content information.

Methods of receiving instructions by the instruction receiving unit 202 may include the above-described methods of (d1) to (d3).

In addition, an instruction from the outside may be received by the instruction receiving unit 202 after detection of an alarm, but is preferably received by the instruction receiving unit 202 in advance. The output control unit 222 preferably determines whether or not the content information of an alarm may be output when the alarm is detected by the detection unit 106, in accordance with the instruction received in advance. This is because, in a case where a configuration is adopted in which an instruction from the outside is received at the time of alarm detection, communication between the communication device 200 and the outside (for example, a server) is required, complicating the processing during alarm detection and leading to an undesirable result. Meanwhile, the configuration in which an instruction is received in advance does not exclude a configuration in which an instruction is received after alarm detection.

In addition, the instruction receiving unit 202 may inquire of the management server 20, and receive an instruction as the response. The instruction receiving unit 202 may refer to the server information table and acquire destination information of the management server 20 corresponding to each of the apparatuses 110 to inquire of the management server 20. The inquiry may be made at installation or initialization of the apparatus 110 or the communication device 200, or at an optional timing.

Alternatively, in a case where the detection unit 106 detects an alarm in a situation where permission to output the alarm has not been received, the instruction receiving unit 202 may inquire of the management server 20 on whether or not to permit outputting the content information of the alarm.

The output control unit 222 outputs summary information of an alarm not expressing the content of the alarm to the output unit 108 before an instruction is received, and outputs the content information of the alarm to the output unit 108 only after an instruction is received.

The summary information of an alarm is, for example, information indicating only that an alarm has been detected in a certain apparatus, and is information which does not express the contents of the alarm such as what kind of alarm has been detected. In addition, the summary information may or may not include information for identifying the apparatus in which an alarm is detected.

As an example, lighting or blinking of the display unit 132 (LED indicator) of the communication module 120 of FIG. 2 may indicated detection of an alarm in any of the apparatuses connected to the communication module 120. Display of alphameric characters or signs, use of a plurality of LEDs, light colors, patterns of lighting and blinking, and the like may express the apparatus that has been detected with the alarm.

In addition, the content information of an alarm includes, for example, information indicating the apparatus that has been detected with the alarm and the type of the alarm. The content information may include information such as monitoring items and the level of the detected alarm. Further, the content information of an alarm may include the detected (or output) date and time information, location information (acquired by, for example, a global positioning system (GPS) included in the apparatus or the communication device), or ways to handle an alarm.

The range of information included in the summary information and the content information described above is an example, and may be appropriately determined in accordance with a system, without being limited thereto. In a case where the summary information is information in which the contents of an alarm is not specified, the summary information may include information, indicating the level of an alarm, such as, for example, information indicating "detection of an alarm requiring an emergency response".

Further, each item to be output as the summary information or the content information of an alarm may be set using the output setting information 212 of Modification Aspect 1 of the second exemplary embodiment.

As described above, in the communication device 220 according to the exemplary embodiment of the present invention, the output control unit 222 outputs the summary information not expressing the content of the detected alarm to the output unit 108, and causes the output unit 108 to display the content information of the alarm only after the instruction receiving unit 202 has received an external instruction. With such a configuration, in a case where an output is not permitted by the external instruction, the user is notified of only the summary information indicating only that an alarm has been detected, and the content information of the alarm may be provided to the user only in a case where the output is permitted.

As stated above, according to the communication device 220 of the exemplary embodiment of the present invention, the same effects as those in the above exemplary embodiment are exhibited, and the detection of an alarm may be transmitted to a user, first, without outputting all of the content information related to every alarm of the plurality of apparatuses 110. Thereby, it is possible to appropriately provide information required by a user, and to let the user quickly ascertain the alarm state of each of the apparatuses. In addition, according to the configuration of the present exemplary embodiment in combination with another exemplary embodiment, it is possible to further select and output only the information determined by a manager as being necessary to be provided to the user. Further, it is possible to set the monitoring items for each of the apparatuses 110, and to instruct the management server 20 side to appropriately output items of which a user is to be notified, without outputting alarms for all items.

### (Third Exemplary Embodiment)

Next, a communication device according to a third exemplary embodiment of the present invention and a method of controlling the same will be described below. Meanwhile, as is the case with the above exemplary embodiment, a program of the present exemplary embodiment is for causing at least one computer to execute the method of controlling a communication device, and the detailed description thereof in the present exemplary embodiment will not be repeated.

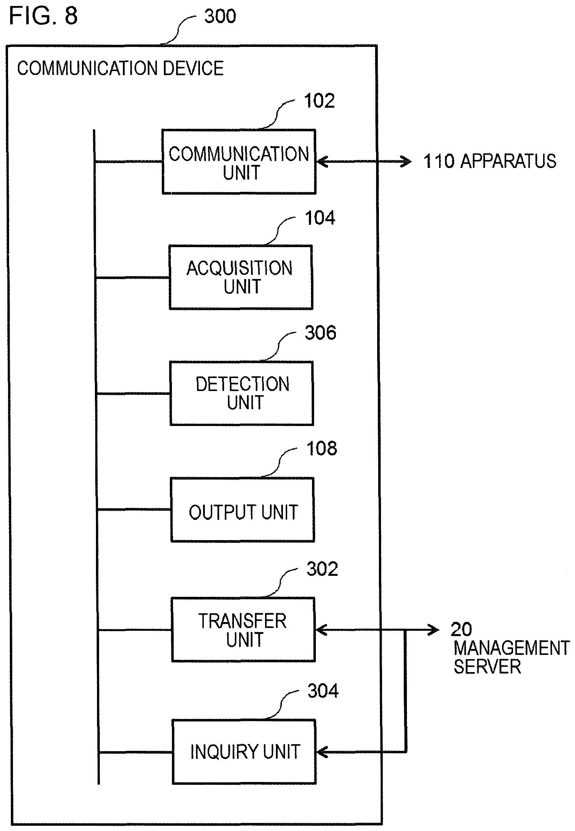

FIG. 8 is a functional block diagram illustrating a logical configuration of a communication device 300 according to the exemplary embodiment of the present invention.

Here, it is assumed that the communication device 300 of the present exemplary embodiment has a function of transferring information of each of the apparatuses 110 to the management server 20 that stores a history of the information of each of the apparatuses 110, and that the communication device 300 holds only history information of less than a predetermined time period.

For example, in a case where a measurement value could not be obtained from the apparatus 110, the communication device 300 of the present exemplary embodiment has a configuration in which it is determined whether the missing measurement value is temporary or continuous based on history information of the measurement value held by the management server 20, and if the missing value is temporary, the missing value is not detected as an alarm.

The communication device 300 of the present exemplary embodiment includes the communication unit 102, the acquisition unit 104, and the output unit 108 which are the same as those of the communication device 100 of the exemplary embodiment of FIG. 1, and further includes a transfer unit 302, an inquiry unit 304, and a detection unit 306.

Meanwhile, the detection unit 306 has the same function as that of the detection unit 106 of the communication device 100 of the above exemplary embodiments, and further has a function of the present exemplary embodiment described later.

In addition, the communication device 300 of the present exemplary embodiment will be described by taking an example in combination with the configuration of the communication device 100 shown in FIG. 1 but may also be combined with a configuration of a communication device of another exemplary embodiment.

In the communication device 300 of the present exemplary embodiment, the transfer unit 302 transfers the measurement value history acquired from each of the apparatuses 110 to the management server 20.

The inquiry unit 304 inquires of the management server 20 when an alarm is detected by the acquisition unit 104.

The detection unit 306 determines whether to set the status as an alarm related to the apparatus 110, based on a response from the management server 20.

The transfer unit 302 and the inquiry unit 304 are connected to the cellular phone network 3 by the communication unit 130 of the communication module 120 shown in FIG. 2 and communicate with the management server 20. A timing at which the transfer unit 302 transfers the measurement value history to the management server 20 is not particularly limited. As described above, the history may be transmitted in accordance with a request from the management server 20, may be transmitted at a timing of reception from the apparatus 110, or may be transmitted at a timing which is set by the communication device 300.

The response obtained from the management server 20 by the inquiry unit 304 may be, for example, a predetermined time period's worth of history information of the measurement value of the apparatus 110. Alternatively, the response from the management server 20 may be information indicating determination results by the management server 20 that the malfunction or abnormality of the apparatus 110 is temporary, not requiring the malfunction or abnormality to be set as an alarm; or that the malfunction or abnormality is continuous or is clearly an abnormality, requiring the malfunction or abnormality to be set an alarm, based on the predetermined time period's worth of history information.

The communication device 300 of the present exemplary embodiment holds only the predetermined time period's worth of history information of the measurement value of each of the apparatuses 110. Therefore, in a case where the acquisition unit 104 could not acquire the measurement value of the apparatus 110, the communication device 300 cannot determine whether the missing measurement value is due to a temporary malfunction such as a communication error or an defective operation which may be immediately restored without requiring special attention, or if the missing measurement value is continuous or is an obvious abnormality, in a state of requiring immediate attention.

In the present exemplary embodiment, the transfer unit 302 transfers the measurement value history acquired from each of the apparatuses 110 to the management server 20, and the management server 20 stores a predetermined time period's worth of the history.

The inquiry unit 304 inquires of the management server 20 holding the history information of the measurement value of each of the apparatuses 110 to acquire a response from the management server 20.

The detection unit 306 determines whether, for example, the communication status of no response from the apparatus 110 should be detected and output as an alarm or the status is not to be detected as an alarm, based on the response from the management server 20. Specifically, the detection unit 306 does not detect the status as an alarm in a case where the contents of the response indicates that the status is due to a temporary malfunction such as a communication error or a defective operation, whereas the detection unit 306 detects the status as an alarm in a case the status is continuous or is an obvious abnormality.

For example, in a case of an electric power meter, if the accumulation time of the measurement values is 30 minutes and a communication error occurs within this time, since accumulated values are held in the electric power meter, the accumulated values can be acquired at the time of return from the communication error, thus the minimum required information can be acquired. Therefore, the error is not required to be detected as an alarm. In addition, in a case where the frequency of missing information exceeds a permissible range in terms of the operation of a system, the error of missing information is preferably detected as an alarm. In this manner, since the conditions for detecting an alarm based on the communication status information indicating no response from the apparatus 110 are different for each of the apparatuses 110, determination processing of whether a status is to be detected as an alarm is preferably performed by the management server 20. Meanwhile, an aspect in which this determination processing is performed on the communication device side of the present invention is not excluded.

Meanwhile, in the present exemplary embodiment, as an example of the situation for making an inquiry to the management server 20 to determine whether an error is to be detected as an alarm, a description will be given of a case where the communication status information indicating no response from the apparatus 110 is acquired. However, the situation in which the inquiry unit 304 inquires of the management server 20 is not limited thereto. For example, the inquiry unit 304 may inquire of the management server 20 in a situation where an alarm is to be detected in association with various alarm detection items regarding the measurement value measured by each of the apparatuses 110 and state information of various apparatus acquired by the acquisition unit 104. As an example, a configuration may be adopted in which the inquiry unit 304 inquires of the management server 20 in a case where the measurement value exceeds a threshold, a case where the radio wave level of communication is low or exceeds the threshold, or an operation error is detected by the apparatus 110, or the like.

That is, in the present exemplary embodiment, in a case where the communication device 300 is not able to acquire or hold information to be used in the determination of alarm detection, the inquiry unit 304 can inquire of the management server 20. Thereby, the communication device 300 of the present exemplary embodiment can perform detection of an alarm based on the response from the management server 20. With such a configuration, the communication device 300 does not need to hold or acquire information required only for alarm detection.

A method of controlling the communication device 300 of the present exemplary embodiment configured in such a manner will be described below.

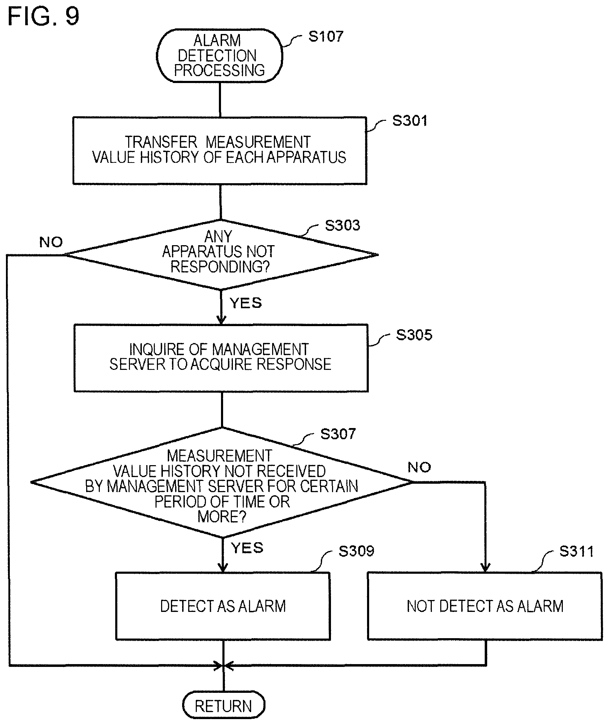

FIG. 9 is a flow diagram illustrating an example of an operation of the communication device 300 of the present exemplary embodiment.

The flow diagram of FIG. 9 shows a detailed procedure in a case where information indicating no response from an apparatus 110 is included in the communication status information during the alarm detection processing of step S107 of the flow diagram of FIG. 3.

First, the transfer unit 302 transfers the measurement value history of each of the apparatuses 110 to the management server 20 (step S301). In a case where the communication status information indicating no response from the apparatus 110 is acquired by the acquisition unit 104 (YES in step S303), the inquiry unit 304 inquires of the management server 20, and acquires a response from the management server 20 (step S305). Meanwhile, in a case where the communication status information indicating no response from the apparatuses 110 is not acquired by the acquisition unit 104 (NO in step S303), the flow ends and returns to step S107 of FIG. 3, and the detection unit 106 performs a detection processing on another monitoring item.

The detection unit 306 determines whether the communication status of no response from an apparatus 110 is or is not to be detected and output as an alarm, based on the response from the management server 20 (step S307).

For example, in a case where a response is obtained from the management server 20 where the response includes information indicating that the measurement value history has not reached the management server 20 over a certain period of time or more (YES in step S307), the detection unit 306 detects the status as an alarm (step S309). On the other hand, in a case where a response is obtained from the management server 20 where the response includes information indicating that there has been no missing measurement value history over a certain period of time or more in the management server 20 (NO in step S307), the detection unit 306 does not detect the status as an alarm (step S311).

The flow ends and returns to step S107 of FIG. 3, and the detection unit 106 performs detection processing on an alarm with respect to another monitoring item. The output control unit 204 outputs information related to alarms to the output unit 108 (step S109 in FIG. 3).

Meanwhile, a history transfer procedure of step S301 of the flow diagram of FIG. 9 is not necessarily required to be performed in the alarm detection processing, and may be further performed at a predetermined time interval for each of the apparatuses 110 in an independent separate flow. In addition, in step S305, a result of an alarm determination made by the management server 20 may be received as a response, and in step S307, determination may be made on whether the status is to be detected as an alarm in accordance with the determination result received from the management server 20.

In the communication device 300 of the present exemplary embodiment configured in such a manner, for example, in a case where the communication status information indicating no response from an apparatus 110 is acquired by the acquisition unit 104, the inquiry unit 304 inquires of the management server 20 and acquires a response from the management server 20. The detection unit 306 determines whether the communication status information indicating no response from the apparatus 110 is to be set as an alarm related to the apparatus 110, based on the acquired response.

Thereby, according to the communication device 300 of the present exemplary embodiment, the same effects as those in the above exemplary embodiments are exhibited. In addition, information which could not be obtained or could not be held by the communication device 300 used for determining whether a status is to be detected as an alarm may be acquired by inquiring of the management server 20 and obtaining the information. Alarm detection may be performed based on the acquired response. In this manner, since the communication device 300 does not need to hold information required for alarm detection, it is not necessary to increase the size of the storage capacity of a memory of the communication device 300 in order to detect an alarm.

### (Fourth Exemplary Embodiment)

Next, a communication device according to a fourth exemplary embodiment of the present invention will be described below. Meanwhile, as is the case with the above exemplary embodiments, the control method and the program of the present exemplary embodiment are for causing at least one computer to execute the method of controlling a communication device, and the detailed description thereof in the present exemplary embodiment will not be repeated.

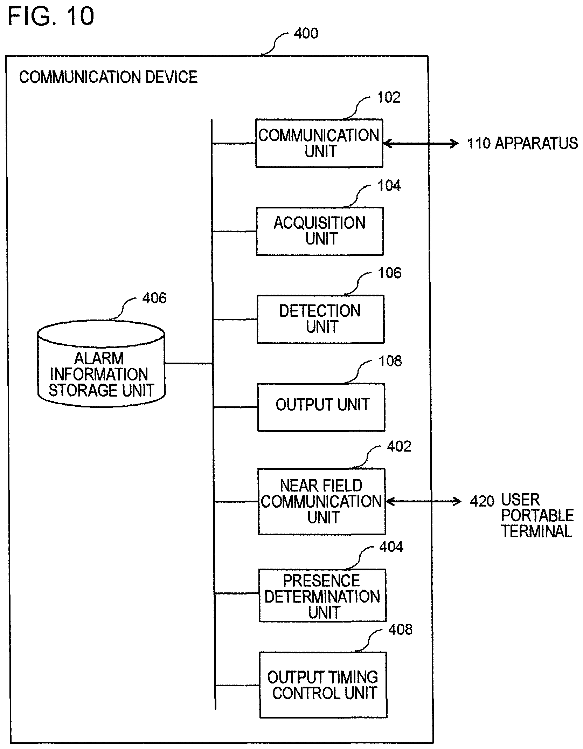

FIG. 10 is a functional block diagram illustrating a logical configuration of a communication device 400 according to the exemplary embodiment of the present invention.

The communication device 400 of the present exemplary embodiment is different from the communication devices of the above exemplary embodiments, in that a configuration is further included in which, when a user approaches the communication device 400 while carrying a portable terminal 420, information related to a detected alarm is transmitted to the user portable terminal 420.

The communication device of the present invention is included in, for example, the smart meter 140 of FIG. 2, but generally, the smart meter is installed in the vicinity of the entrance of a home. Consequently, when a user returns and enters his or her home, the user can take notice of an alarm earlier by the information related to the alarm being transmitted from the communication device 400 to the user portable terminal 420.

The communication device 400 of the present exemplary embodiment includes the communication unit 102, the acquisition unit 104, the detection unit 106, and the output unit 108 which are the same as those of the communication device 100 of the exemplary embodiment shown in FIG. 1, and further includes a near field communication unit 402, a presence determination unit 404, and an output timing control unit 408.

Meanwhile, the communication device 400 of the present exemplary embodiment will be described by taking an example of the device in combination with the configuration of the communication device 100 shown in FIG. 1, but the device may also be combined with the configuration of a communication device of another exemplary embodiment.

In the communication device 400 of the present exemplary embodiment, the near field communication unit 402 performs near field communication with the user portable terminal 420.

The presence determination unit 404 determines whether or not the user portable terminal 420 has entered a communication area of the near field communication unit 402.

In a case where it is determined that the user portable terminal 420 has entered the communication area of the near field communication unit 402 based on the determination result of the presence determination unit 404, the output timing control unit 408 transmits the information related to an alarm to the user portable terminal 420.

The near field communication unit 402 may have a wireless communication system such as, for example, Bluetooth (Registered Trademark) adopted therein, but there is no limitation thereto.

The user portable terminal 420 is, for example, a smartphone, a tablet terminal, a cellular phone, or the like, and is a terminal having the same wireless communication function as that of the near field communication unit 402 such as Bluetooth. The near field communication unit 402 performs pairing in advance between the communication device 400 and the user portable terminal 420, and prepares communication with the user portable terminal 420. The near field communication unit 402 automatically starts communication with the user portable terminal 420 when the paired user portable terminal 420 enters a communication area reached by radio waves transmitted by the communication unit 402 itself. The presence determination unit 404 determines that the user portable terminal 420 has entered the communication area by the start of communication between the near field communication unit 402 and the user portable terminal 420.

The communication device 400 of the present exemplary embodiment may further include an alarm information storage unit 406 that stores information related to an alarm detected by the detection unit 106. In FIG. 10, a configuration is shown in which the alarm information storage unit 406 is included, but the communication device 400 is not necessarily required to include the alarm information storage unit 406. A configuration may be used in which an external device includes the alarm information storage unit 406, and at the transmission timing of information related to an alarm, the output timing control unit 408 of the communication device 400 may acquire information related to an alarm from the alarm information storage unit 406 of the external device and transmit the acquired information to the user portable terminal 420.

In the present exemplary embodiment, the alarm information storage unit 406 is implemented by the memory 124 of FIG. 2. The information related to an alarm detected by the detection unit 106 may be output by the output unit 108 at a point in time of its detection, or may merely be stored in the alarm information storage unit 406 without being outputted. Alternatively, the information may only be output to an LED indicator.

When the user portable terminal 420 enters the communication area, the output timing control unit 408 causes the output unit 108 to transmit the information related to an alarm stored in the alarm information storage unit 406 to the user portable terminal 420. In this manner, the output unit 108 can output the information related to an alarm when an alarm is detected by the detection unit 106, and when the user portable terminal 420 enters the communication area thereafter.

The user portable terminal 420 receives information related to an alarm from the communication device 400, and based on the received information, performs at least any processing, for indicating detection of an alarm, of: causing a display unit (LED indicator or liquid crystal indicator) (not shown) of the user portable terminal 420 to display a message or blinking of LEDs; causing a voice output unit (not shown) of the user portable terminal 420 to output a warning sound or a warning voice; and driving a vibration unit (not shown) of the user portable terminal 420.

Meanwhile, a portion of a program for implementing this function of the communication device 400 of the present exemplary embodiment is assumed to be installed in advance, as an application program, in the user portable terminal 420 and to be started up. This application program can also be regarded as a portion of the computer program of the present invention.

The application program of the user portable terminal 420 causes a CPU (not shown) of the user portable terminal 420 to execute a procedure of receiving information related to an alarm transmitted from the communication device 400, and causes the CPU to further execute at least any of a procedures of: causing the display unit (LED indicator or liquid crystal indicator) of the user portable terminal 420 to display a message or blink LEDs indicating detection of an alarm; causing the voice output unit of the user portable terminal 420 to output a warning sound or a warning voice, and driving the vibration unit of the user portable terminal 420.

In the communication device 400 of the present exemplary embodiment configured in such a manner, the presence determination unit 404 detects the user portable terminal 420 having entered the communication area of the near field communication unit 402, and the near field communication unit 402 communicates with the user portable terminal 420. The output timing control unit 408 transmits alarm information to the user portable terminal 420.

As stated above, according to the communication device 400 of the present exemplary embodiment, the same effects as those in the above exemplary embodiment are exhibited. Information related to an alarm is output during alarm detection, and further, when a user is near the communication device, the information related to an alarm having been previously detected can be transmitted to the user portable terminal 420. Thereby, a user may more easily take notice of an alarm, and can confirm the status of the alarm on the indicator of a nearby communication device immediately after noticing the alarm. It is thus possible to allow the user to quickly ascertain the alarm state of each apparatus.

As described above, although the exemplary embodiments of the present invention have been set forth with reference to the accompanying drawings, the exemplary embodiments are merely illustrative of the present invention, and various configurations other than those stated above can be adopted.

### [Example]

### (Example 1)

Hereinafter, an example of the exemplary embodiment of the present invention will be described.

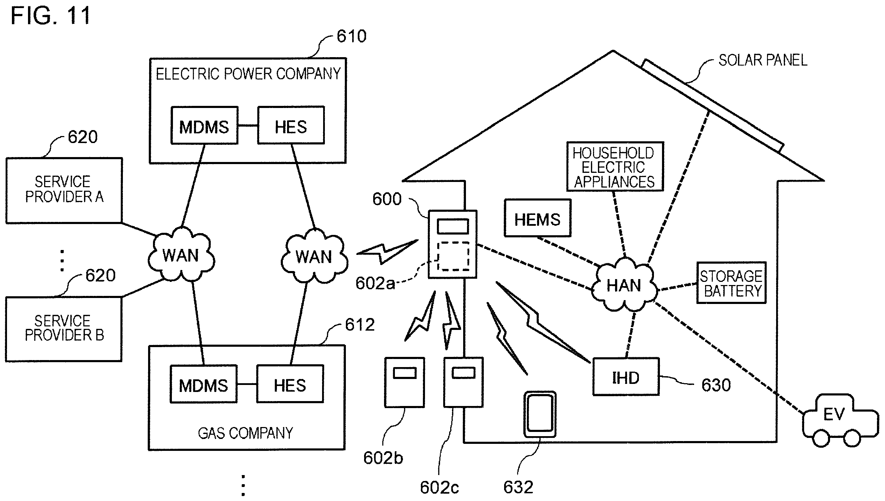

FIG. 11 is a diagram illustrating an outline of a configuration of a communication system 1 according to Example 1 of the present invention.

The communication system 1 includes: a home power management system (HEMS) constituting a home area network (HAN) which is connected to household electric appliances, solar panels, storage batteries, or electrical vehicles (EV) in each household or the like through wireless communication; a smart meter 600 including the communication device (communication module 120 of FIG. 2) of the present invention and an electric power meter 602a; a plurality of apparatuses 602b and apparatuses 602c (such as, for example, a gas meter or a water meter; hereinafter, in a case where the apparatuses are not required to be particularly distinguished from each other, simply called the "apparatus 602") that wirelessly communicate with the smart meter 600; a head end system (HES) of an electric power company 610 or a gas company 612, and a meter data management system (MDMS) of the electric power company 610 or the gas company 612.

Meanwhile, in the present example, the HEMS is illustrated, but the communication device of the present invention can also be applied to a building power management system (BEMS), a factory power management system (FEMS), and a cluster/community power management system (CEMS).

The electric power meter 602a measures the amount of power consumption in a household, and the smart meter 600 transmits the measurement value to the electric power company 610. The smart meter 600 is assumed to have the configuration of the smart meter 140 of FIG. 2 described in the above exemplary embodiment.

The HES of the electric power company 610 or the gas company 612 is connected through a wide area network (WAN) by a cellular phone communication system such as 3G of the smart meter 600 in each household, and acquires the measurement value of the amount of power consumption, the amount of gas consumption, or the like from the smart meter 600. Meanwhile, in a case of a dense residential area, smart meters in each household may wirelessly communicate with each other and form a multi-hop network, and a concentrator (not shown) may aggregate and transmit the measurement values of the respective smart meters to the HES of the electric power company or the gas company through the WAN.

The MDMS of the electric power company 610 or the gas company 612 manages the measurement values acquired from the smart meter 600 and collected by the HES.

Further, the MDMS of the electric power company 610 or the gas company 612 may be connected to a plurality of service providers 620 through the WAN. Alternatively, in a case where an apparatus managed by the service provider 620 is connected to the smart meter 600, the smart meter 600 may be directly connected to the service provider 620 through the WAN.

In the communication system 1 configured in such a manner, in the communication device (smart meter 600) of the present invention, the acquisition unit 104 acquires measurement values from the plurality of apparatuses 602 including the electric power meter 602a, and transmits the acquired values to the HES of the electric power company 610, the gas company 612, or the like through the WAN. The HES delivers the received measurement values to the MDMS, and the MDMS manages the measurement values.

In addition, the HEMS visualizes the amount of power consumption or the like in a household and displays the visualized amount on an in-home display (IHD) 630.

The acquisition unit 104 of the communication device (smart meter 600) also acquires information related to the state of an apparatus from the apparatus, together with a measurement value. Further, when communicating with an apparatus, the acquisition unit 104 of the communication device also acquires the status of the communication. In the present example, information of a remaining cell capacity is acquired as apparatus state information. In addition, a radio wave status (signal intensity) during communication with an apparatus is acquired as a communication status.

The detection unit 106 performs alarm detection of monitoring items with respect to at least any of the measurement value of an apparatus, the apparatus state information, and the communication status information. The radio wave status is indicated by, for example, four levels of 0 to 3, and is detected as an alarm in a case of level 0. In addition, the remaining cell capacity is detected as an alarm when being, for example, less than 10%.

In the present example, the output unit 108 transmits the information related to an alarm detected by the detection unit 106 to the IHD 630 or a user's portable terminal 632. Further, the output unit 108 presents the occurrence of an alarm by blinking the indicator of the smart meter 600.

Meanwhile, the IHD 630 or the user's portable terminal 632 is assumed to have an application program installed therein in advance, the program implementing a function of receiving information from the communication device (smart meter 600) of the present invention, a function of displaying a screen for presenting information related to an alarm based on the received information, or the like.

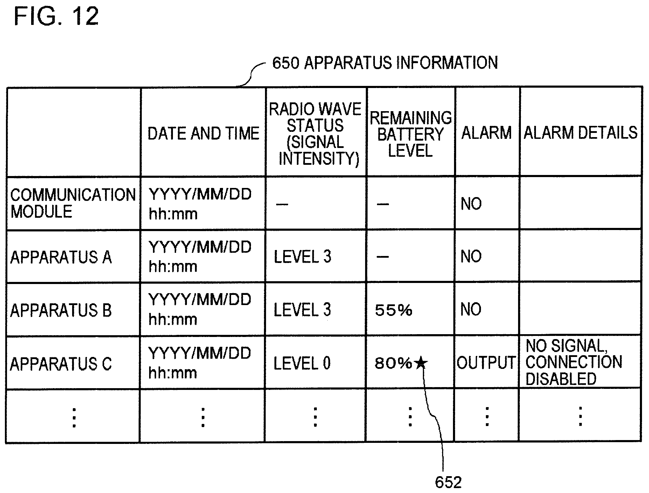

FIG. 12 is a diagram illustrating an example of a structure of apparatus information 650 managed by the communication device (smart meter 600) of the present example.

The apparatus information 650 includes the presence or absence of a detected alarm and the contents thereof, together with the date and time when information is acquired, the radio wave status, and the remaining cell capacity, for each apparatus. In addition, as shown in FIG. 12, the apparatus information 650 may include the presence or absence of an alarm output by the communication module itself and the contents thereof.

Here, since the radio wave status of the apparatus C is level 0 and communication with the apparatus C is not possible, an alarm is detected (alarm: present), and the alarm details of "no signal, connection disabled" are recorded. Meanwhile, regarding the remaining cell capacity of the apparatus C, since communication is not possible, information (denoted by a black star mark 652 in the drawing) having been acquired before through communication is held in the apparatus information.

In a case where a user takes notice of the occurrence of an alarm through the blinking of the LED indicator of the smart meter 600 (communication module 120), the user makes a phone call to the electric power company 610, the gas company 612, or the service provider 620, and informs a manager of the contents displayed on the LED indicator. The server (MDMS or HES) of the electric power company 610, the gas company 612, or the service provider 620 connects to the smart meter 600 through the WAN to acquire the apparatus information 650 shown in FIG. 12. In addition, the smart meter 600 (communication module 120) may further be equipped with a global positioning system (GPS) function, and transmit location information acquired by the GPS in response to an inquiry from the server (MDMS or HES) of the electric power company 610, the gas company 612, or the service provider 620.

The server (MDMS or HES) of the electric power company 610, the gas company 612, or the service provider 620 identifies the state of an apparatus or the status of occurrence of an alarm based on the apparatus information 650 collected from the smart meter 600. When the alarm concerns a drop in the remaining cell capacity or the like, the user is instructed to replace the cell. When the alarm concerns an error in communication with an apparatus or the like, maintenance work on the apparatus is performed by remote control from the server (MDMS or HES) of the electric power company 610, the gas company 612, or the service provider 620, or by dispatching a serviceman.

As stated above, the present invention has been described with reference to the exemplary embodiments and the example, but the present invention is not limited to the exemplary embodiments and the examples described above. In the configurations and the details of the present invention, various changes and modifications as can be understood by those skilled in the art can be made without departing from the scope of the present invention.

Meanwhile, in a case where information related to a user is acquired and used in the present invention, this is assumed to be duly performed.

Hereinafter, examples of reference forms are appended.
1. A method of controlling a communication device performed by the communication device including:
   communicating with each of a plurality of apparatuses;
   acquiring a measurement value measured by each of the apparatuses and apparatus state information related to a state of each of the apparatuses from each of the apparatuses, and acquiring communication status information related to a communication status of each of the apparatuses;
   detecting an alarm related to each of the apparatuses based on at least any one of the measurement value, the apparatus state information, and the communication status information related to the apparatus; and
   outputting information related to the detected alarm related to each of the apparatuses.
2. The method of controlling a communication device according to 1, the method performed by the communication device further including:
   receiving an instruction related to an output of the alarm from outside; and
   outputting the information related to the detected alarm in a case where the instruction is received.
3. The method of controlling a communication device according to 2, further including the step performed by the communication device of outputting the information related to the detected alarm based on output setting information related to permission or prohibition to output the alarm with respect to each monitoring item of the alarm or for each of the apparatuses.
4. The method of controlling a communication device according to 2 or 3, the method performed by the communication device further including:
   when the alarm is detected,
   outputting summary information of the alarm in a case where the instruction is not received; and
   outputting content information of the alarm in a case where the instruction is received.
5. The method of controlling a communication device according to any one of 1 to 4, the method performed by the communication device further including:
   transferring a measurement value history acquired from each of the apparatuses to a management server;
   inquiring of the management server when the alarm is detected; and
   determining whether a status is to be set as an alarm related to the apparatuses based on a response from the management server.
6. The method of controlling a communication device according to any one of 1 to 5, the method performed by the communication device further including:
   performing near field communication with a user's portable terminal;
   determining whether the user's portable terminal has entered a communication area of the near field communication; and
   transmitting, based on a result of the determination, the information related to the alarm to the user's portable terminal in a case where it is determined that the user's portable terminal has entered the communication area of the near field communication.
7. The method of controlling a communication device according to any one of 1 to 6, wherein the apparatus state information includes liquefied petroleum (LP) gas remaining amount information, gas shutoff information, a remaining cell capacity, a remaining battery capacity, a battery deterioration status, or information related to a failure, an operation stop, or a restart which is detected by the apparatus itself.
8. The method of controlling a communication device according to any one of 1 to 7, wherein the communication status information includes information related to a radio wave status, presence or absence of a response, a delay of the response, reception of data of a non-compatible format, or reception of invalid data during communication between the apparatus and the communication device.
9. The method of controlling a communication device according to any one of 1 to 8, wherein the communication device detects an alarm related to each of the apparatuses in a case where the measurement value related to the apparatus is equal to or greater than a threshold (upper limit) and equal to or less than a threshold (lower limit), falls outside of a predetermined range, or has no value.
10. A program causing a computer implementing a communication device to execute:
   a procedure of communicating with each of a plurality of apparatuses;
   a procedure of acquiring a measurement value measured by each of the apparatuses and apparatus state information related to a state of each of the apparatuses from each of the apparatuses in accordance with the communicating procedure, and acquiring communication status information related to a communication status of each of the apparatuses in the communicating procedure;
   a procedure of detecting an alarm related to each of the apparatuses based on at least any one of the measurement value, the apparatus state information, and the communication status information related to the apparatuses; and
   a procedure of outputting information related to the detected alarm related to each of the apparatuses.
11. The program according to 10, causing a computer to further execute:
   a procedure of receiving an instruction related to an output of the alarm from outside; and
   a procedure of outputting information related to the alarm detected in accordance with the procedure of detecting an alarm in a case where the instruction is received.
12. The program according to 11, causing a computer to further execute a procedure of outputting the information related to the alarm detected in accordance with the procedure of detecting an alarm, based on output setting information related to permission or prohibition to output the alarm with respect to each monitoring item of the alarm or for each of the apparatuses.
13. The program according to 11 or 12, causing a computer to further execute,
   when the alarm is detected in accordance with the alarm detecting procedure:
   a procedure of outputting summary information of the alarm in a case where the instruction is not received; and
   a procedure of outputting content information of the alarm in a case where the instruction is received.
14. The program according to any one of 10 to 13, causing a computer to further execute:
   a procedure of transferring a measurement value history acquired from each of the apparatuses to a management server;
   a procedure of inquiring of the management server when the alarm is detected; and
   a procedure of determining whether a status is to be set as an alarm related to the apparatus based on a response from the management server.
15. The program according to any one of 10 to 14, causing a computer to further execute:
   a procedure of performing near field communication with a user's portable terminal;
   a procedure of determining whether the user's portable terminal has entered a communication area of the near field communication; and
   a procedure of transmitting, based on a result of the determination, the information related to the alarm to the user's portable terminal in a case where it is determined that the user's portable terminal has entered the communication area of the near field communication.
16. The program according to any one of 10 to 15, wherein the apparatus state information includes liquefied petroleum (LP) gas remaining amount information, gas shutoff information, a remaining cell capacity, a remaining battery capacity, a battery deterioration status, or information related to a failure, an operation stop, or a restart which is detected by the apparatus itself.
17. The program according to any one of 10 to 16, wherein the communication status information includes information related to a radio wave status, presence or absence of a response, a delay of the response, reception of data of a non-compatible format, or reception of invalid data during communication between the apparatus and the communication device.
18. The program according to any one of 10 to 17, wherein in the procedure of detecting an alarm, an alarm related to each of the apparatuses is detected in a case where the measurement value related to the apparatuses is equal to or greater than a threshold (upper limit) and equal to or less than a threshold (lower limit), falls outside of a predetermined range, or has no value.

This application claims priority from Japanese Patent Application No. 2014-166569 filed on August 19, 2014, the content of which is incorporated herein by reference in its entirety.

## Claims

1. A communication device comprising:
a communication unit that communicates with each of a plurality of apparatuses;
an acquisition unit that acquires a measurement value measured by each of the apparatuses and apparatus state information related to a state of each of the apparatuses from each of the apparatuses through the communication unit, and acquires communication status information related to a communication status of each of the apparatuses in the communication unit;
a detection unit that detects an alarm related to each of the apparatuses based on at least any one of the measurement value, the apparatus state information, and the communication status information related to the apparatuses; and
an output unit that outputs information related to the detected alarm related to each of the apparatuses.

2. The communication device according to claim 1, further comprising:
an instruction receiving unit that receives an instruction related to an output of the alarm from outside; and
an output control unit that, in a case where the instruction is received, outputs the information related to the alarm detected by the detection unit to the output unit.

3. The communication device according to claim 2, wherein the output control unit outputs the information related to the alarm detected by the detection unit to the output unit, based on output setting information related to permission or prohibition to output the alarm with respect to each monitoring item of the alarm or for each of the apparatuses.

4. The communication device according to claim 2 or 3, wherein when the alarm is detected by the detection unit, the output control unit
outputs summary information of the alarm to the output unit in a case where the instruction is not received, and
outputs content information of the alarm to the output unit in a case where the instruction is received.

5. The communication device according to any one of claims 1 to 4, further comprising:
a transfer unit that transfers a measurement value history acquired from each of the apparatuses to a management server; and
an inquiry unit that inquires of the management server when the alarm is detected,
wherein the detection unit determines whether a status is to be set as an alarm related to the apparatus based on a response from the management server.

6. The communication device according to any one of claims 1 to 5, further comprising:
a near field communication unit that performs near field communication with a user's portable terminal;
a presence determination unit that determines whether the user's portable terminal has entered a communication area of the near field communication unit; and
an output timing control unit that transmits the information related to the alarm to the user's portable terminal in a case where it is determined that the user's portable terminal has entered the communication area of the near field communication unit, based on a determination result of the presence determination unit.

7. The communication device according to any one of claims 1 to 6, wherein the apparatus state information includes liquefied petroleum (LP) gas remaining amount information, gas shutoff information, a remaining cell capacity, a remaining battery capacity, a battery deterioration status, or information related to a failure, an operation stop, or a restart which is detected by the apparatus itself.

8. The communication device according to any one of claims 1 to 7, wherein the communication status information includes information related to a radio wave status, presence or absence of a response, a delay of the response, reception of data of a non-compatible format, or reception of invalid data during communication between the apparatus and the communication device.

9. The communication device according to any one of claims 1 to 8, wherein the detection unit detects an alarm related to each of the apparatuses in a case where the measurement value related to the apparatus is equal to or greater than a threshold or equal to or less than a threshold, falls outside of a predetermined range, or has no value.

10. A method of controlling a communication device performed by the communication device comprising: communicating with each of a plurality of apparatuses;
acquiring a measurement value measured by each of the apparatuses and apparatus state information related to a state of each of the apparatuses from each of the apparatuses, and acquiring communication status information related to a communication status of each of the apparatuses;
detecting an alarm related to each of the apparatuses based on at least any one of the measurement value, the apparatus state information, and the communication status information related to the apparatuses; and
outputting information related to the detected alarm related to each of the apparatuses.

11. A program causing a computer implementing a communication device to execute:
a procedure of communicating with each of a plurality of apparatuses;
a procedure of acquiring a measurement value measured by each of the apparatuses and apparatus state information related to a state of each of the apparatuses from each of the apparatuses in accordance with the procedure of communicating with each of a plurality of apparatuses, and acquiring communication status information related to a communication status of each of the apparatuses in the procedure of communicating with each of a plurality of apparatuses;
a procedure of detecting an alarm related to each of the apparatuses based on at least any one of the measurement value, the apparatus state information, and the communication status information related to the apparatus; and
a procedure of outputting information related to the detected alarm related to each of the apparatuses.
